# EUROPEAN PATENT SPECIFICATION

(11) **EP 4 011 532 B1**
(45) Date of publication and mention of the grant of the patent: **04.12.2024**
(21) Application number: 21212287.3
(22) Date of filing: 03.12.2021
(51) Int. Cl.: B23B 39/16

(54) **IMPROVED WORKING HEAD AND MACHINE TOOL COMPRISING SAID WORKING HEAD**
VERBESSERTER BEARBEITUNGSKOPF UND WERKZEUGMASCHINE UMFASSEND EINES SOLCHEN BEARBEITUNGSKOPF
TETE D'USINAGE ET MACHINE-OUTIL COMPRENANT UN TELLE TETE D'USINAGE

(30) Priority: 09.12.2020 IT 202000030137
(43) Date of publication of application: 15.06.2022
(73) Proprietor: SCM Group S.p.A., 47921 Rimini (RN) (IT)
(72) Inventor: VANNUCCI, Carlo, 47921 Rimini (IT)
(74) Representative: Tiburzi, Andrea

(56) References cited:
- EP-A2- 1 101 555
- WO-A2-2009/021498
- DE-A1- 19 756 337

## Description

The present invention relates to an improved working head and a machine tool comprising said working head.

### Field of the invention

In particular, the present invention relates to the structure of said working head provided with a plurality of spindles, which support respective tools for working pieces, designed to move, by means of a single motion transmission group (comprising a shaft and a motor to rotate said shaft), only one or more spindles, which belong to said plurality of spindles and support the tools necessary for the specific machining to which said pieces have to be subjected to.

Said pieces can be panels made of wood or other material.

In the following, the description will be directed to a working head to be mounted on a machine tool for working pieces, wherein said working head is provided with a plurality of tools, which are in particular drilling bits for drilling said pieces, but is it is apparent that the working head itself should not be considered limited to this specific use.

Said machine tool can be a multifunction machine tool configured to perform different working operations on a workpiece or alternatively a "stand alone" machine tool, i.e., a machine inserted in a machining line comprising a plurality of machines series connected with each other, in which each machine performs a respective machining on a workpiece.

### Prior art

As is known in the field of the machine tools for working pieces, by means of a working head it is possible that the workpieces are subjected to various workings, such as, for example, cutting, drilling, edging, etc.

In particular, the workpieces can be panels made of wood.

During drilling, one or more holes are made on one or more faces of the panel.

These holes can have the same or different diameters.

Furthermore, these holes can be arranged on the same face of the panel or on different faces of the panel (for example a hole on the upper face of the panel, a hole on the lower face, and further holes on the side faces of the panel).

To speed up the machining times, a known type of working head used to drill said panels is equipped with a plurality of spindles, which support respective drilling bits.

Each drilling bit is removably coupled to a respective spindle, which, when it rotates, causes the rotation of the drilling bit.

The coupling of the drilling bit to the spindle can be achieved by means of a respective holder or a respective tool holder, or, alternatively, a drilling bit can be mounted directly on a respective spindle.

To make the holes on the upper face of the panel (with respect to the support plane on which the panel is arranged), said drilling tips are mounted on the working head, in such a way as to have an axis orthogonal with respect to the upper face of the panel itself.

On the other hand, in order to make holes on a side face of the panel, said drilling bits are mounted on the working head in such a way as to have an axis orthogonal with respect to the side face of the panel itself.

Furthermore, said working head of known type is provided with a single motion transmission group, which transmits a rotary motion to all the spindles and consequently to all the drilling bits.

The motion transmission group comprises a shaft, having a longitudinal axis, and a motor, preferably an electric motor, for rotating said shaft about said longitudinal axis.

Through a gear mechanism, the motion transmission group transmits the rotary motion to each spindle.

In particular, said shaft is provided with a driving gear wheel arranged at one of its ends, and a first driven gear wheel is coaxial and integral with a first spindle, as well as meshed with said driving gear wheel.

In this way, when the driving gear wheel rotates, the first driven gear wheel also rotates, causing the rotation of the first spindle, which, in turn, causes the rotation of the drilling bit coupled to said first spindle.

The rotation of said first driven gear wheel causes the rotation of at least one second driven gear wheel, coaxial and integral with a second spindle, as well as meshed with said first driven gear wheel, so that, when the first driven gear wheel rotates, also said second driven gear wheel rotates, causing the rotation of said second spindle, which in turn causes the rotation of the drilling tip coupled to said second spindle.

In turn, the second driven gear wheel of the second spindle can mesh with at least a third driven gear wheel, which is coaxial and integral with a third spindle, as well as meshed with said second driven gear wheel, so that, when the second driven gear wheel rotates, also said third driven gear wheel rotates, causing the rotation of said third spindle, which in turn causes the rotation of the drilling tip coupled to said third spindle, and so on.

The number of driven gear wheels can be greater than or equal to the number of spindles.

Each drilling bit is supported by a respective spindle or mounted on a respective spindle.

Consequently, when a spindle rotates the respective drilling bit also rotates.

Each spindle (and consequently each drilling bit) is movable along a respective longitudinal axis, parallel to the longitudinal axis of the shaft of the motion transmission group, in a first direction and a second direction, opposite to said first direction.

In particular, each spindle is movable between a rest position and an operating position, in which each spindle is translated by a predetermined distance along its longitudinal axis.

When one or more spindles are in the rest position, the respective drilling tip is raised with respect to the workpiece, so that, when the working head is in use, the respective drilling tip of said spindles does not contact the workpiece, as said workpiece must not be subjected to machining by means of said drilling bits.

When one or more spindles are in the operating position, the respective drilling tip is lowered with respect to the workpiece until it contacts said workpiece, so that, when the working head is in use, the respective drilling tip of said spindles contacts the workpiece since said workpiece must be subjected to machining by means of said drilling bits.

Each spindle is moved independently from the other spindles.

In this way, one or more spindles of said plurality of spindles can be in the operating position (and therefore it is possible to make holes through the respective drilling bits) and one or more further spindles of the same plurality of spindles can be in the rest position (and therefore it is not possible to make any holes through the respective drilling tips).

The selection of the spindles to be brought into the operating position can take place, for example, by means of a respective moving device, in particular, a pneumatic moving device, and more particularly a pneumatic cylinder, which can be a single-acting pneumatic cylinder or a double-acting pneumatic cylinder.

Each pneumatic cylinder comprises a chamber and a piston sliding inside said chamber, in which said piston is connected to a spindle.

When the pneumatic cylinder is a single-acting pneumatic cylinder, the piston moves said spindle from said rest position to said operating position and, by means of a spring, said spindle moves from said operating position to said rest position.

When the pneumatic cylinder is a double-acting pneumatic cylinder, the piston moves said spindle between said rest position and said operating position and vice versa.

Furthermore, said working head of known type comprises a logic control unit configured to move several spindles independently of each other, by means of the respective moving device, according to the type of machining.

The structure of said working head is designed in such a way that, although only one or more spindles of a plurality of spindles are in the operating position (and therefore the respective drilling tips are in contact with the workpiece), all the spindles and therefore all the drilling bits rotate, since the shaft of the motion transmission group transmits the rotary movement to all the spindles and the rotation of the spindles causes the rotation of all the drilling bits, regardless of whether some spindles are in operating position and other spindles are in the rest position.

Consequently, the spindles in the rest position also rotate.

This means that also the drilling bits coupled to the respective spindles in the rest position, i.e., the drilling bits that are not to be used for working the panel, rotate.

Regardless of the moving device for moving the spindle into the operating position, the working head of known type is designed to rotate all the spindles and consequently all the drilling bits, regardless of the number of drilling bits used for working a piece.

In other words, when the working head is in use and it is not necessary that all the drilling bits are used, all the spindles rotate (following the rotation of the respective driven gear wheel integral with each spindle) and only some of them are in operating position.

As a result, all the drilling bits rotate, although only some of them are drilling the piece.

For this reason, said working head has some disadvantages.

A first disadvantage of this working head of known type is given by the fact that some components of the spindles, such as for example bearings and gears, are subject to early wear.

A second disadvantage is given by the fact that said working head of known type dissipates excessive power to overcome the friction and the inertia of the rotating elements, such as the driving gear wheel and the driven gear wheels.

A third disadvantage is given by the fact that the motor of the motion transmission group can be subjected to an overload, due for example to a drilling bit stuck in a workpiece, with the risk that this overload causes the motor and any mechanical parts (such as driving gear wheel, driven gear wheels, bearings, etc.) to break.

A fourth disadvantage is given by the need to carry out frequent maintenance of the working head, for example to lubricate one or more bearings.

A fifth disadvantage is the noise of the working head when in use. The noise intensity is proportional to the number of elements put in rotation.

A further disadvantage is given by the fact that the working head can reach a temperature in use (depending on the number of elements set in rotation) such that any mechanical parts (such as driving gear wheel, driven gear wheels, bearings, etc.) and/or lubricants may deteriorate.

A working head according to the preamble of appended claim 1 is known from patent document DE 197 56 337 A1.

### Aim of the invention

Aim of the present invention is to overcome said disadvantages by providing a working head designed to rotate only the spindles that support the tools needed to machine a workpiece, avoiding the rotation of the spindles that support the tools that are not needed to work said piece.

Advantageously, by means of the working head object of the invention, the tools which are not used to machine said piece, are not rotated by the respective spindle.

A further aim of the invention is to provide a working head, which requires less maintenance than a working head of known type and which has a low manufacturing cost.

### Object of the invention

It is, therefore, specific object of the present invention a working head according to appended claim 1.

Said motion transmission group may comprise a driving element associated to said shaft and a plurality of driven elements, wherein each driven element is associated to a respective spindle.

In particular, said driving element may be coaxial to said shaft and each driven element may be coaxial to a respective spindle.

More in particular, said driving element may comprise a driving gear wheel and each driven element may comprise a respective driven gear wheel, wherein said driving gear wheel may be meshed with at least one driven gear wheel.

Further, said working head may comprise a respective moving device for each spindle, wherein each moving device may be configured to move a respective spindle from said rest position to said operating position and vice versa.

Each moving device may comprise a chamber and a piston, sliding inside said chamber in a first direction and in a second direction, opposite to said first direction, and each spindle comprises a second end portion, opposite to said first end portion, connected to a respective piston, so that the movement of said piston causes the translation of a respective spindle along its longitudinal axis.

Each moving device may comprise an inlet to allow that a fluid enters said camera, so as to cause the movement of said piston in said first direction and maintain a respective spindle in operating position, and elastic means, movable between a compressed state, when said fluid enters said chamber, and an expanded state, when the passage of said fluid in said chamber is prevented or said fluid in said chamber is not under pressure, so that said piston moves in said second direction, bringing the respective spindle in rest position.

Each tool of the working head may be couplable in a removable manner to a respective spindle and is arranged along the longitudinal axis of a respective spindle.

In particular each tool may comprise a drilling bit.
Advantageously, the working head may comprise one or more tool holder head, wherein each tool holder head is provided with one or more respective further tools, wherein each of said further tools has a respective further longitudinal axis and is arranged with respect to the working head in such a way that each further longitudinal axis is perpendicular to the longitudinal axis of the shaft of said motion transmission group.

In this case the first portion end of each spindle may be shaped to be coupled in a removable manner to said one or more tool holder head.

It is preferable that each further tool preferably comprises a respective drilling bit.

The present invention relates also to a machine tool for working pieces.

Said machine tool comprises:
- a basement,
- a working table for supporting at least one peace, wherein said working table is arranged on said basement,
- a working unit for working said peace, wherein said working unit comprises at least one working head above mentioned.

### List of attached figures

The present invention will be now described, for illustrative but not limitative purposes, according to its preferred embodiments, with particular reference to the figures of the enclosed drawings, wherein:
Figure 1 is a top perspective view of a working head, according to the present invention, comprising a plurality of spindles, each of which supports a respective tool;
Figure 2 is a perspective view from the bottom of the working head of Figure 1;
Figure 3 is the bottom perspective view of the working head of Figure 2, in which a part has been removed to show how a motion transmission group transmits a rotary motion to the spindles of the working head;
Figure 4 shows a detail of Figure 3, relating to the motion transmission group and a limited number of spindles arranged close to said motion transmission group;
Figures 5 and 6 show respectively the longitudinal section of a spindle in the rest position and the operating position;
Figure 7 is a detail of Figure 6 relating to the coupling between a driven gear wheel and a respective spindle;
Figure 8 shows a longitudinal section of a spindle variant to show a different coupling between said spindle and the respective driven gear wheel, said variant not falling under the scope of the appended claims;
Figure 9 shows a detail of the spindle of Figure 8.

In the various figures, similar parts will be indicated by the same reference numbers.

### Detailed description

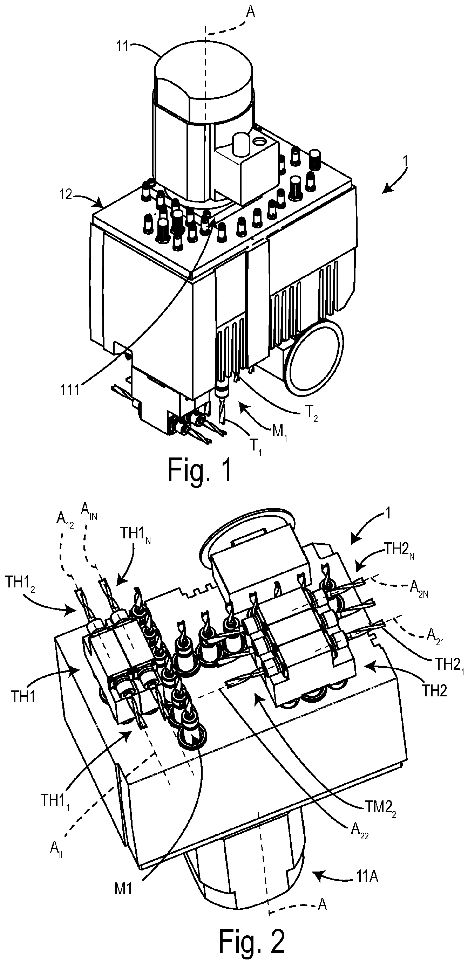

With reference to Figures 1-7, a working head for working pieces is described, indicated with the numerical reference 1.

In particular, said pieces can be panels made of wood, plastic, metal, marble, glass, composite materials, etc.

With particular reference to Figures 1-4, a working head 1 for working pieces according to the present invention is described.

The working head 1 comprises a motion transmission group 11 and a plurality of spindles M₁,M₂ ... M_{N}.

With reference to the motion transmission group 11, said motion transmission group 11 comprises:
- a shaft 11A having a longitudinal axis A and rotating around said longitudinal axis, and
- a motor (not shown), preferably an electric motor, connected to said shaft 11A, to rotate said shaft 11A.

Furthermore, the motion transmission group 11 is provided with a base 111 coupled to a plate 12, and said plate 12 is provided with a through hole 121 to allow the passage of the shaft 11A of the motion transmission group 11.

With reference to said plurality of spindles M₁, M₂... M_{N}, each spindle has a respective longitudinal axis A₁, A₂... A_{N}, parallel to the longitudinal axis A of the shaft 11A.

Each spindle M₁, M₂... M_{N} comprises a first end portion PE1 (i.e., the tool-side portion of the spindle) and a second end portion PE2, opposite the first end portion.

The first end portion PE1 is shaped to support a respective tool T₁,T₂, ... T_{N}.

In particular, each first end portion PE1 is shaped to be removably coupled to a respective tool T₁,T₂... T_{N}.
In the embodiment that is described, each tool T₁,T₂... T_{N} is a drilling tip, and consequently the working head is a head for drilling the workpieces.

Each drilling bit is arranged along the longitudinal axis A₁, A₂... A_{N} of the respective spindle M₁,M₂ ...M_{N}.

Each spindle M₁, M₂...M_{N} is also provided with a respective moving device MD to move said spindle M₁,M₂...M_{N} between a rest position and an operating position.

In the rest position, the first end portion PE1 of a spindle M₁, M₂...M_{N} is at least partially retracted into the working head 1.

In the operating position, the first end portion PE1 of a spindle M₁,M₂...M_{N} is translated by a predetermined distance along the longitudinal axis A₁,A₂...A_{N} of the respective spindle M₁,M₂...M_{N}, to allow the respective tool T₁,T₂...T_{N} to work a piece.

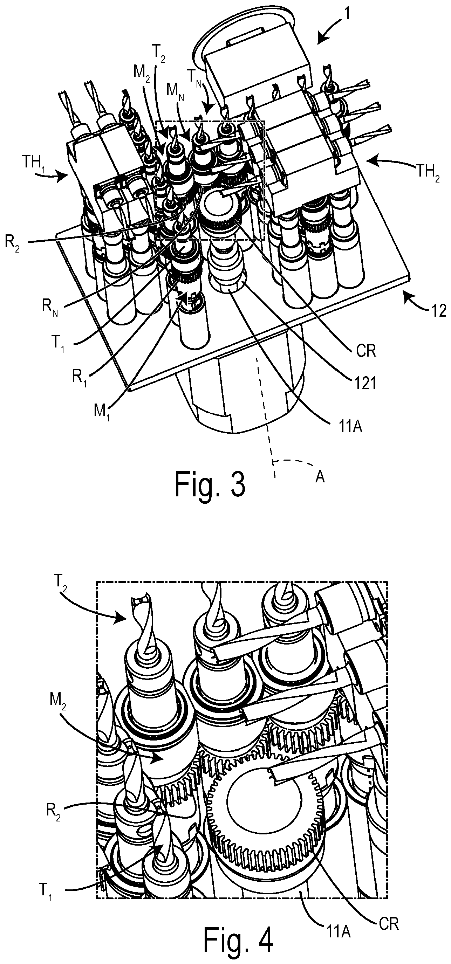

With particular reference to Figures 3-4, a motion transmission mechanism for transmitting the rotary motion of the shaft 11A of the motion transmission group 11 to each spindle M₁,M₂...M_{N} is shown.

In the embodiment that is described, said motion transmission mechanism is a gear mechanism.

Said motion transmission mechanism comprises:
- a driving element CR, associated with the shaft 11A of the motion transmission group 11, and
- a plurality of driven elements R₁,R₂...R_{N}, each one of which is associated with a respective spindle M₁,M₂...M_{N}.

In the embodiment described, said driving element CR is a driving gear wheel and each driven element R₁, R₂... R_{N} is a respective driven gear wheel.

The driving gear wheel CR is coaxial with the shaft 11A and each driven gear wheel R₁,R₂... R_{N} is coaxial with a respective spindle M₁,M₂... M_{N}.

In addition, said driving gear wheel CR meshes with at least one driven gear wheel R₁,R₂...R_{N}.

However, the motion transmission mechanism can be different from that described above, without departing from the scope of the invention.

For example, said motion transmission mechanism can comprise a driving friction wheel, associated with the shaft 11A of the motion transmission group 11, and a plurality of driven friction wheels, associated with respective spindles. Consequently, the motion is transmitted from said driving friction wheel to said driven friction wheels.

In a further example, said motion transmission mechanism can comprise a driving pulley, associated with the shaft 11A of the motion transmission group 11, and a plurality of driven pulleys, associated with respective spindles, as well as a member (for example a transmission belt) to transmit the motion from said driving pulley to said driven pulleys through said member.

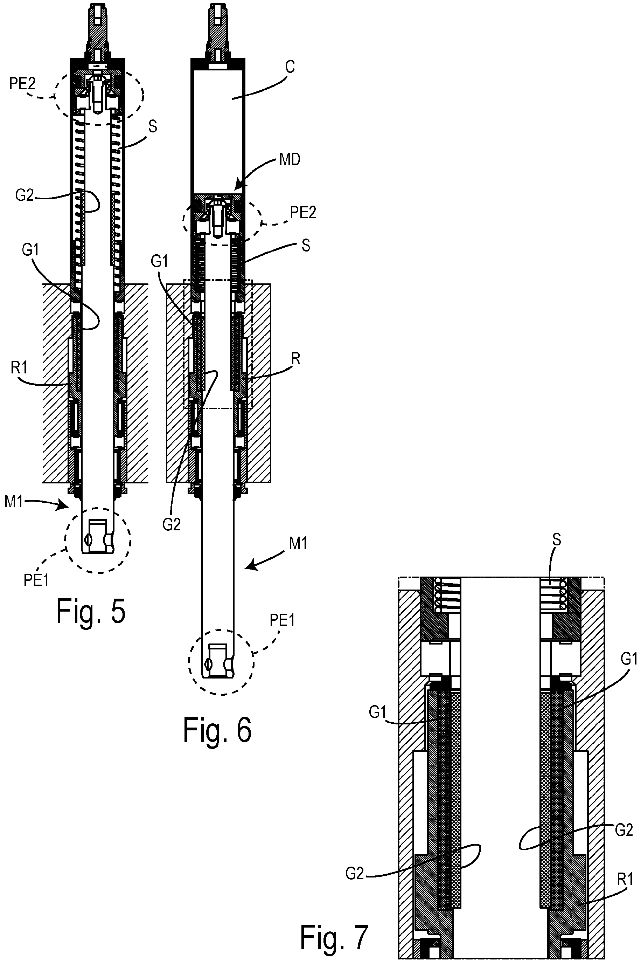

Figure 5 shows a spindle M₁ in the rest position.

Figure 6 shows the same spindle M₁ in the operating position.

The working head 1 comprises a respective coupling device for each spindle M₁,M₂...M_{N} to couple/uncouple a spindle M₁,M₂...M_{N} to/from said motion transmission mechanism.

In particular, said coupling device is configured to couple a spindle M₁,M₂...M_{N} to the motion transmission group, when said spindle M₁,M₂...M_{N} is in the operating position, so that said motion transmission group 11 transmits the rotary motion to said spindle M₁,M₂...M_{N}, and to uncouple a spindle M₁,M₂...M_{N} from said motion transmission group when said spindle M₁,M₂...M_{N} is in the rest position, so that the rotary motion is not transmitted by said motion transmission group 11 to said spindle M₁,M₂... M_{N}.

Figures 5 and 6 mentioned above also show a moving device MD to move the spindle M₁ of said plurality of spindles M₁,M₂...M_{N}.

The following considerations referred to the spindle M₁ apply to the other spindles of said plurality of spindles.

In the embodiment described, said moving device MD is a pneumatic moving device.

In particular, said moving device MD comprises a chamber C and a piston P, sliding inside the chamber C in a first direction and in a second direction, opposite to said first direction.

The second end portion PE2 (i.e., the end portion opposite to the first end portion PE1), is connected to the piston P, so that the movement of said piston P causes the translation of the spindle M₁ along its longitudinal axis A₁.

Said moving device MD comprises an inlet to allow a fluid entering said chamber C (i.e. to allow a quantity of fluid to be introduced into said chamber), so as to cause the movement of the piston P in said first direction and maintain the spindle M₁ in the operating position.

The moving device MD further comprises respective elastic means S, movable between a compressed state, when said fluid enters into said chamber C, and an expanded state, when the passage of said fluid in said chamber C is interrupted or said fluid in chamber C is not under pressure, so that the piston P moves in said second direction, bringing the spindle M₁ into the rest position.

In the embodiment that is described, said fluid is a compressed fluid, in particular a compressed gas and more particularly compressed air.

Said elastic means S are arranged inside the chamber C, in such a way as to at least partially surround the spindle M₁ (i.e., the outer surface of the spindle M₁).

In particular, said elastic means S are uncoupled from the spindle M₁, so as not to rotate when the spindle M₁ rotates.

In the embodiment described, said elastic means S comprise a spring.

In a variant not shown in the figures, the moving device MD can be devoid of elastic means S and comprise a double-acting pneumatic cylinder of a known type.

This pneumatic cylinder has a first inlet and a second inlet, different from the first inlet, to allow the fluid entering the chamber C, so that the piston P flows inside the chamber C in the first direction or the second direction.

Figures 5 to 8 show a coupling device for coupling a spindle M₁ to the motion transmission mechanism.

Said coupling device comprises:
- first releasable coupling means, integral with the driving gear wheel CR, and
- second releasable coupling means, integral with the spindle M₁.

Said second releasable coupling means are configured to be coupled/uncoupled to/from said first releasable coupling means so that the spindle M₁ is in the operating position only when said first releasable coupling means are coupled to said second coupling means releasable.

In other words, each driven gear wheel R₁,R₂...R_{N} is equipped with respective first releasable coupling means and each spindle M₁,M₂...M_{N} is provided with respective second releasable coupling means.

According to the present invention, said coupling device is of the magnetic type.

More particularly, said first releasable coupling means comprise at least a first magnet G1, and said second releasable coupling means comprise at least one second magnet G2, so that a force of attraction is generated when said first magnet G1 is coupled to said second magnet G2.

Said first magnet G1 can have a cylindrical shape, in such a way as to surround at least a portion of the inner surface of said driving gear wheel CR.

Said second magnet G2 can have a cylindrical shape in such a way as to surround at least a portion of the external surface of said spindle M₁.

However, said magnets G1, G2 can have a different shape from the cylindrical shape, without departing from the scope of the invention.

For example, in an alternative, said magnets G1, G2 can have the shape of a parallelepiped or a truncated cone.

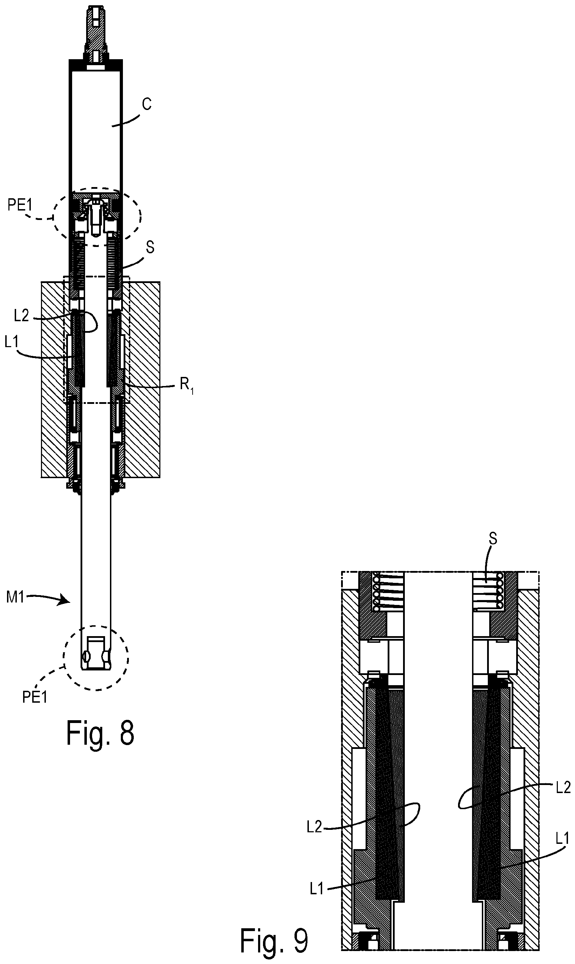

In a second variant of the coupling device, not falling under the scope of the appended claims and shown in Figure 9, said first releasable coupling means comprise a first portion L1, and said second releasable coupling means comprise a second portion L2, shaped to be coupled to said first portion L1, so that said first portion L1 and said second portion L2 are coupled by means of a force coupling with conical friction surfaces.

In further variants, not falling under the scope of the appended claims and not shown in the Figures, said first releasable coupling means can be coupled to said second releasable coupling means by means of mechanical couplings of known type, such as:
- a shape coupling;
- a shape coupling by means of teeth;
- a centrifugal friction coupling;
- a magnetic friction coupling;
- a hydraulic friction coupling;
- a pneumatic friction coupling;
- a friction coupling with external embracing jaws;
- a coupling between flat surfaces by means of a clutch (for example single disc or multiple discs);
- a surplus coupling (for example a free wheel).

The considerations mentioned above with reference to the spindle M₁ apply to the remaining spindles M₂...M_{N}.

Consequently, each spindle has a first end portion PE1 and a second end portion PE2, and the working head comprises a respective moving device and a respective coupling device for each spindle.

Coming back to Figures 1-4, it should be noted that a first group of spindles of said plurality of spindles M₁,M₂...M_{N} is coupled to a first tool holder head TH1, and a second group of spindles of said plurality of spindles M₁,M₂...M_{N} is coupled to a second tool holder head TH2.

This is due to the fact that each spindle M₁,M₂...M_{N} is shaped to be removably coupled to a tool holder head.

Said first tool holder head TH1 and said second tool holder head TH2 are respectively equipped with a first group of further spindles to support a first group of further tools TH1₁,TH1₂...TH1_{N}, and a second group of further spindles to support a second group additional tools TH21,TH2₂...TH2_{N}.

Each group of further spindles can comprise any number of further spindles, even a single further spindle.

Each group of further tools can comprise any number of additional tools, even a single additional tool.

Each further tool of said first group of further tools TH1₁,TH1₂...TH1_{N} has a respective longitudinal axis A₁₁,A₁₂...A_{1N} and each further tool of said second group of further tools TH2₁,TH2₂ ... TH2_{N} has a respective longitudinal axis A₂₁,A₂₂...A_{2N}.

Each further tool of said groups of further tools is arranged with respect to the working head 1, in such a way that the respective longitudinal axis A₁₁,A₁₂...A_{1N}, A₂₁,A₂₂...A_{2N} is normal to the longitudinal axis A of the motion transmission group 11.

In the embodiment described, each further tool is a drilling bit.

The motion is transmitted to the further tools of the first group of further tools TH1₁,TH1₂...TH1_{N} and of the second group of further tools TH2₁,TH2₂...TH2_{N} by means of a first angular gear box and a second angular gear box respectively (not shown).

The first angular gear box is arranged inside the first tool holder head TH1 and connects at least one of the spindles of said first group of spindles to each further spindle of said first tool holder head (i.e., to each further spindle of the first group of further spindles), so that the motion is transmitted from said spindle of said first group of spindles to each further spindle of said first group of further spindles.

The second angular gear box is arranged inside the second tool holder head TH2 and connects at least one of the spindles of said second group of spindles to each further spindle of said second tool holder head (i.e., to each further spindle of the second group of further spindles), so that the motion is transmitted from said spindle of said second group of spindles to each further spindle of said second group of further spindles.

The working head 1 can be installed in different types of machine tools.

Generally speaking, said machine tools comprise:
- a basement,
- a working table for supporting at least one piece, wherein said work surface is arranged on said basement, and
- a working unit for working said piece, wherein said working unit comprises at least one working head 1 as described above.

In a first example, said working head can be installed in a multifunction machine tool called working center.

Said multifunction machine tool is configured to perform different processes on one or more workpieces to be machined, for example milling, cutting, drilling, edging, etc.

Said multifunction machine tool comprises:
- a basement,
- a working table arranged on said basement and on which at least one workpiece is constrained,
- a working unit arranged on a crossbar, movable along the basement, wherein said working unit comprises at least one working head, which can be the working head described above,
- a logic control unit to move, by means of an electric motor, said crossbar (and consequently said working unit) and to drive said working unit for the specific machining of the piece by means of said working head.

Furthermore, since the working head can be movable with respect to said crossbar along at least one first reference axis, said logic control unit can be configured to move said working head with respect to the crossbar along said axis.

Said working head can be movable with respect to a first reference axis, and to a second reference axis, orthogonal to said first reference axis, or it can be movable with respect to a first reference axis, to a second reference axis orthogonal to said first reference axis, and to a third reference axis, orthogonal to said second reference axis.

Furthermore, said working head can also rotate around a first axis or around a first axis and a second axis, different from said first axis, or around a first axis, a second axis, and a third axis, different from each other.

Consequently, the logic control unit can be configured to rotate said working head around one or more axes, so that the working head performs the movements necessary for the specific machining of the workpiece.

Said working unit can comprise a plurality of working heads and at least one working head can be the working head described above.

Regardless of the number of working heads, each working head can support different tools to perform multiple machining on the workpiece.

In a second example, said working head can be installed in a drilling machine to perform one or more holes on one or more faces of the workpiece, wherein said holes can be through holes or not.

Said drilling machine is generally inserted in a machining line comprising a plurality of machines, in which each machine carries out a respective machining on the workpiece.

A drilling machine comprises:
- a basement,
- a working table, arranged on said basement, on which a workpiece is positioned and/or a workpiece is moved along at least one direction by means of a gripping system,
- a working unit comprising at least one working head, which may be the working head described above,
- a logic control unit configured to drive said gripping system to grip the workpiece and move it along said working table, and to drive said working unit for the specific machining of the piece through said working head.

Furthermore, since said working head can be movable in at least one direction with respect to the work table, different from the direction of movement of the piece, said logic control unit can be configured to move said working head with respect to the working table.

In the embodiment that is described, as mentioned above, each tool is a drilling tip.

Consequently, the working head is a drilling head.

Depending on the number and position of the holes to be made on the workpiece, the logic control unit of the machine tool on which said working head is installed, is configured to drive the motion transmission group 11 of the working head 1, which is part of the working unit.

The drive of the motion transmission group 11 allows the shaft 11A to rotate around the axis A and by means of the driving wheel CR, arranged on said shaft 11A, the rotary motion of said shaft 11A is transmitted to all the driven gearwheels R₁,R₂... R_{N}.

Depending on the type of drilling to be performed on the workpiece (defined by the number of holes, the position of the holes, the size of the holes, as well as the depth of said holes, etc.), the control logic unit is configured to activate a fluid injecting device (in particular a compressed fluid), for introducing said fluid into the chamber C of a respective moving device MD to move only the spindles M₁,M₂...M_{N}, whose drilling tips are necessary to perform the holes for working the workpiece.

In the embodiment that is described, said fluid injecting device is a compressor.

The pistons P present inside the respective chambers C, associated with respective spindles M₁,M₂...M_{N}, slide inside the respective chamber C in a first direction, overcoming the resistance of the respective elastic means S and moving the spindles M₁,M₂...M_{N} in operating position.

At this point, the first releasable coupling means of a respective coupling device, integral with a respective driven gear wheel R₁,R₂...R_{N} of the spindles M₁,M₂...M_{N} in operating position to perform the machining, couple to the respective second releasable coupling means of the same coupling device, integral with a respective spindle M₁,M₂...M_{N}, so that the rotary motion of the shaft 11A of the motion transmission group 11 is transmitted to said spindles M₁,M₂...M_{N} in operating position, so that the respective drilling bits T₁,T₂...T_{N} rotate to drill the workpiece.

At the end of the drilling on the workpiece, the logic control unit deactivates the fluid injecting device, so as to prevent said compressed fluid from being introduced into the chambers C of the respective moving devices MD of said spindles M₁,M₂...M_{N} while in operating position.

Consequently, the elastic means S push the respective pistons P in the second direction (opposite to the first direction) and the spindles M₁,M₂...M_{N} pass into the rest position.

At this point, the first releasable coupling means, integral with the driven gear wheels R₁,R₂...R_{N} of said spindles M₁,M₂...M_{N}, which have passed into rest position, uncouple from the corresponding second releasable coupling means, integral with each of said spindles M₁,M₂...M_{N}, so that the rotary motion of the shaft 11A of the motion transmission group 11 is not transmitted to said spindles M₁,M₂...M_{N} in the rest position.

### Advantages

Advantageously, the working head object of the invention is designed to rotate only the spindles of the tools, in particular the drilling bits, to be used for working a piece.

A second advantage is that the components of the spindles are subject to less wear.

A third advantage is given by the fact that the motor of the motion transmission group dissipates less power than a working head of known type.

A fourth advantage is given by the fact that the motor of the motion transmission group is not subjected to an overload, due to the presence of said first releasable coupling means and of said second releasable coupling means. In fact, said first releasable coupling means and said second releasable coupling means behave like a torque limiter.

A fifth advantage is given by the fact that it is possible to reduce maintenance interventions on the spindles and the components of said spindles, such as, for example, interventions to lubricate bearings and gears.

A sixth advantage is given by the fact that, when the working head object of the invention is in use, the intensity of the noise is lower than that of a working head of known type. This is due to the smaller number of spindles put in rotation.

A further advantage is given by the fact that the temperature of the working head object of the invention when in use, does not reach a value such as to deteriorate mechanical and/or lubricating parts.

The present invention has been described for illustrative but not limitative purposes, according to its preferred embodiments, but it is to be understood that modifications and/or changes can be introduced by those skilled in the art without departing from the scope defined in the enclosed claims.

## Claims

1. Working head (1) for working pieces, comprising:
- a motion transmission group (11) comprising a shaft (11A) having a longitudinal axis (A) and a motor for rotating said shaft (11A) about said longitudinal axis (A),
- a plurality of tools (T₁, T₂...T_{N}) ,
- a plurality of spindles (M₁, M₂...M_{N}) having a respective longitudinal axis (A₁, A₂...A_{N}) , wherein each spindle (M₁, M₂...M_{N}) comprises a first end portion (PE1) shaped to support a respective tool (T₁, T₂...T_{N}) and movable between a rest position, in which a respective first end portion (PE1) is at least partially retracted into said working head (1), and an operating position, in which a respective first end portion (PE1) is translated of a predetermined distance along the respective longitudinal axis (A₁,A₂...A_{N}) of the spindle (M₁, M₂...M_{N}) ,
- a motion transmission mechanism (CR, R₁, R₂...R_{N}) to transmit the rotary motion of the shaft (11A) of said motion transmission group (11) to each spindle (M₁, M₂...M_{N}) ,
wherein
said working head (1) comprises a respective coupling device (G1,G2) for each spindle (M₁, M₂...M_{N}) to couple a spindle (M₁, M₂...M_{N}) to said motion transmission mechanism (CR, R₁, R₂...R_{N}) when said spindle (M₁, M₂...M_{N}) is in operating position, in such a way that a rotatory motion is transmitted by said motion transmission group (11) to said spindle (M₁,M₂...M_{N}), and to uncouple a spindle (M₁,M₂...M_{N}) from said motion transmission mechanism (CR, R₁, R₂...R_{N}) when said spindle (M₁, M₂...M_{N}) is in rest position, in such a way that a rotary motion of said motion transmission group (11) is not transmitted to said spindle (M₁, M₂...M_{N}) ,
wherein
each coupling device (G1,G2) comprises first releasable coupling means (G1) integral with said motion transmission mechanism (R₁, R₂...R_{N}), and second releasable coupling means (G2) for each spindle (M₁, M₂...M_{N}), wherein said second releasable coupling means (G2) are integral with a respective spindle (M₁, M₂...M_{N}) and are configured to be coupled/uncoupled to/from respective first releasable coupling means (G1) in such a way that one or more spindles (M₁, M₂...M_{N}) are in operating position only when said first releasable coupling means (G1; L1) are coupled to respective second releasable coupling means (G2),
**characterized in that**
said first releasable coupling means (G1) consists of at least one first magnet (G1), and said second releasable coupling means (G2) consists of at least one second magnet (G2), so that, when said first magnet (G1) is coupled to said second magnet (G2), a force of attraction is generated.

2. Working head (1) according to the previous claims, **characterized in that** said motion transmission mechanism (CR,R₁, R₂...R_{N}) comprises a driving element (CR) associated to said shaft (11A) and a plurality of driven elements (R₁, R₂...R_{N}) , wherein each driven element (R₁, R₂...R_{N}) is associated to a respective spindle (M₁, M₂...M_{N}) .

3. Working head (1) according to the previous claim, **characterized in that** said driving element (CR) is coaxial to said shaft (11A), and each driven element (R₁,R₂...R_{N}) is coaxial to a respective spindle (M₁,M₂...M_{N}) .

4. Working head (1) according to claim 2 or 3, **characterized in that** said driving element (CR) comprises a driving gear wheel (CR) and each driven element (R₁,R₂...R_{N}) comprises a respective driven gear wheel (R₁,R₂...R_{N}) , wherein said driving gear wheel (CR) is meshed with at least one driven gear wheel (R₁, R₂...R_{N}) .

5. Working head (1) according to any one of previous claims, **characterized in that** said working head (1) comprises a respective moving device (MD) for each spindle (M₁, M₂...M_{N}), wherein each moving device (MD) is configured to move a respective spindle (M₁, M₂...M_{N}) from said rest position to said operating position operating and vice versa.

6. Working head (1) according to claim 5, **characterized**
**in that**
each moving device (MD) comprises a chamber (C) and a piston (P), sliding inside said chamber (C) in a first direction and in a second direction, opposite to said first direction,
**in that**
each spindle (M₁, M₂...M_{N}) comprises a second end portion (PE2), opposite to said first end portion (PE1), connected to a respective piston (P), so that the movement of said piston (P) causes the translation of a respective spindle (M₁, M₂...M_{N}) along its longitudinal axis (A₁, A₂...A_{N}) .

7. Working head (1) according claim 6, **characterized in that** each moving device (MD) comprises an inlet to allow that a fluid enters said chamber (C), so as to cause the movement of said piston (P) in said first direction and maintain a respective spindle (M₁,M₂...M_{N}) in operating position, and elastic means (S), movable between a compressed state, when said fluid enters said chamber (C), and an expanded state, when the passage of said fluid in said chamber (C) is prevented or said fluid in said chamber (C) is not under pressure, so that said piston (P) moves in said second direction, bringing the respective spindle (M₁, M₂...M_{N}) to rest position.

8. Working head (1) according to any one of previous claims, **characterized in that** each tool (T₁, T₂...T_{N}) is couplable in a removable manner to a respective spindle (M₁, M₂...M_{N}); each tool (T₁, T₂...T_{N}) being arranged along the longitudinal axis (A₁, A₂...A_{N}) of a respective spindle (M₁, M₂...M_{N}) .

9. Working head (1) according to any of previous claims, **characterized in that** each tool (T₁,T₂...T_{N}) comprises a drilling bit.

10. Working head (1) according any one of previous claims, **characterized in that** said working head (1) comprises one or more tool holder head (TH1;TH2), each tool holder head (TH1;TH2) is provided with one or more respective further tools (TH1₁,TH1₂...TH1_{N}; TH2₁,TH2₂...TH2_{N}) , wherein each of said further tools (TH1₁, TH1₂...TH1_{N};TH2₁, TH2₂...TH2_{N}) has a respective further longitudinal axis (A₁₁,A₁₂...A_{1N}; A₂₁,A₂₂...A_{2N}) and is arranged with respect to the working head (1) in such a way that each further longitudinal axis (A₁₁,A₁₂...A_{1N}; A₂₁, A₂₂...A_{2N}) is perpendicular to the longitudinal axis (A) of the shaft (11A) of said motion transmission group (11); each further tool (TH1₁, TH1₂...TH1_{N}; TH2₁,TH2₂...TH2_{N}) preferably comprising a respective drilling bit,
**in that**
the first portion end (PE1) of each spindle (M₁, M₂...M_{N}) is shaped to be coupled in a removable manner to said one or more tool holder head (TH1; TH2).

11. Machine tool for working pieces, comprising:
- a basement,
- a working table for supporting at least one piece, wherein said working table is arranged on said basement,
- a working unit for working said piece,
**characterized in that**
said working unit comprises at least a working head (1) according to any one of the previous claims.

## Patentansprüche

1. Bearbeitungskopf (1) für Werkstücke, umfassend:
- eine Bewegungsübertragungsgruppe (11), umfassend eine Welle (11A), die eine Längsachse (A) aufweist, und einen Motor zum Drehen der Welle (11A) um die Längsachse (A),
- eine Vielzahl von Werkzeugen (T₁, T₂...T_{N}),
- eine Vielzahl von Spindeln (M₁, M₂...M_{N}), die eine jeweilige Längsachse (A₁, A₂...A_{N}) aufweisen, wobei jede Spindel (M₁, M₂...M_{N}) einen ersten Endabschnitt (PE1) umfasst, der geformt ist, um ein jeweiliges Werkzeug (T₁, T₂...T_{N}) zu tragen und zwischen einer Ruheposition, in der ein jeweiliger erster Endabschnitt (PE1) zumindest teilweise in den Bearbeitungskopf (1) zurückgezogen ist, und einer Betriebsposition, in der ein jeweiliger erster Endabschnitt (PE1) um eine vorbestimmte Strecke entlang der jeweiligen Längsachse (A₁, A₂...A_{N}) der Spindel (M₁, M₂...M_{N}) verschoben wird, beweglich ist,
- einen Bewegungsübertragungsmechanismus (CR, R₁, R₂...R_{N}) zum Übertragen der Drehbewegung der Welle (11A) der Bewegungsübertragungsgruppe (11) auf jede Spindel (M₁, M₂...M_{N}),
wobei
der Bearbeitungskopf (1) eine jeweilige Kupplungsvorrichtung (G1, G2) für jede Spindel (M₁, M₂...M_{N}) umfasst, um eine Spindel (M₁, M₂...M_{N}) mit dem Bewegungsübertragungsmechanismus (CR, R₁, R₂...R_{N}) zu koppeln, wenn die Spindel (M₁, M₂...M_{N}) in der Betriebsposition ist, sodass eine Drehbewegung durch die Bewegungsübertragungsgruppe (11) auf die Spindel (M₁, M₂...M_{N}) übertragen wird, und um eine Spindel (M₁, M₂...M_{N}) von dem Bewegungsübertragungsmechanismus (CR, R₁, R₂...R_{N}) zu entkoppeln, wenn die Spindel (M₁, M₂...M_{N}) in der Betriebsposition ist, sodass eine Drehbewegung der Bewegungsübertragungsgruppe (11) nicht auf die Spindel (M₁, M₂...M_{N}) übertragen wird,
wobei
jede Kupplungsvorrichtung (G1, G2) erste lösbare Kupplungseinrichtungen (G1), die einstückig mit dem Bewegungsübertragungsmechanismus (R₁, R₂...R_{N}) ausgebildet sind, und zweite lösbare Kupplungseinrichtungen (G2) für jede Spindel (M₁, M₂...M_{N}) umfasst, wobei die zweiten lösbaren Kupplungseinrichtungen (G2) einstückig mit einer jeweiligen Spindel (M₁, M₂...M_{N}) ausgebildet und konfiguriert sind, um mit den jeweiligen ersten lösbaren Kupplungseinrichtungen (G1) gekoppelt/entkoppelt zu werden, sodass eine oder mehrere Spindeln (M₁, M₂...M_{N}) nur dann in Betriebsposition sind, wenn die ersten lösbaren Kupplungseinrichtungen (G1; L1) mit den jeweiligen zweiten lösbaren Kupplungseinrichtungen (G2) gekoppelt sind,
**dadurch gekennzeichnet, dass** die erste lösbare Kupplungseinrichtung (G1) aus mindestens einem ersten Magneten (G1) besteht und die zweite lösbare Kupplungseinrichtung (G2) aus mindestens einem zweiten Magneten (G2) besteht, sodass, wenn der erste Magnet (G1) mit dem zweiten Magneten (G2) gekoppelt ist, eine Anziehungskraft erzeugt wird.

2. Bearbeitungskopf (1) nach den vorherigen Ansprüchen, **dadurch gekennzeichnet, dass** der Bewegungsübertragungsmechanismus (CR, R₁, R₂...R_{N}) ein mit der Welle (11A) verbundenes Antriebselement (CR) und eine Vielzahl von angetriebenen Elementen (R₁, R₂...R_{N}) umfasst, wobei jedes angetriebene Element (R₁, R₂...R_{N}) mit einer entsprechenden Spindel (M₁, M₂...M_{N}) assoziiert ist.

3. Bearbeitungskopf (1) nach dem vorherigen Anspruch, **dadurch gekennzeichnet, dass** das Antriebselement (CR) koaxial zu der Welle (11A) ist und jedes angetriebene Element (R₁, R₂...R_{N}) koaxial zu einer jeweiligen Spindel (M₁, M₂...M_{N}) ist.

4. Bearbeitungskopf (1) nach Anspruch 2 oder 3, **dadurch gekennzeichnet, dass** das antreibende Element (CR) ein antreibendes Zahnrad (CR) und jedes angetriebene Element (R₁, R₂...R_{N}) ein entsprechendes angetriebenes Zahnrad (R₁, R₂...R_{N}) umfasst, wobei das antreibende Zahnrad (CR) mit mindestens einem angetriebenen Zahnrad (R₁, R₂...R_{N}) in Eingriff ist.

5. Bearbeitungskopf (1) nach einem der vorherigen Ansprüche, **dadurch gekennzeichnet, dass** der Bearbeitungskopf (1) eine jeweilige Bewegungsvorrichtung (MD) für jede Spindel (M₁, M₂...M_{N}) umfasst, wobei jede Bewegungsvorrichtung (MD) konfiguriert ist, um eine jeweilige Spindel (M₁, M₂...M_{N}) von der Ruheposition in die Betriebsposition bewegt, und umgekehrt.

6. Bearbeitungskopf (1) nach Anspruch 5,
**dadurch gekennzeichnet, dass**
jede Bewegungsvorrichtung (MD) eine Kammer (C) und einen Kolben (P) umfasst, der im Inneren der Kammer (C) in einer ersten Richtung und in einer zweiten, der ersten Richtung entgegengesetzten Richtung gleitet,
dass jede Spindel (M₁, M₂...M_{N}) einen zweiten Endabschnitt (PE2) gegenüber dem ersten Endabschnitt (PE1) aufweist und mit einem entsprechenden Kolben (P) verbunden ist, sodass die Bewegung des Kolbens (P) die Verschiebung einer entsprechenden Spindel (M₁, M₂...M_{N}) entlang ihrer Längsachse (A₁, A₂...A_{N}) bewirkt.

7. Bearbeitungskopf (1) nach Anspruch 6, **dadurch gekennzeichnet, dass** jede Bewegungsvorrichtung (MD) einen Einlass, um zu ermöglichen, dass ein Fluid in die Kammer (C) eintritt, um die Bewegung des Kolbens (P) in der ersten Richtung zu bewirken und eine entsprechende Spindel (M₁, M₂...M_{N}) in Betriebsposition zu halten, und elastische Einrichtungen (S), die zwischen einem komprimierten Zustand, wenn das Fluid in die Kammer (C) eintritt, und einem expandierten Zustand, wenn der Durchgang des Fluids in der Kammer (C) verhindert wird oder das Fluid in der Kammer (C) nicht unter Druck steht, beweglich sind, sodass sich der Kolben (P) in der zweiten Richtung bewegt und die jeweilige Spindel (M₁, M₂...M_{N}) in die Ruheposition bringt, umfasst.

8. Bearbeitungskopf (1) nach einem der vorherigen Ansprüche, **dadurch gekennzeichnet, dass** jedes Werkzeug (T₁, T₂...T_{N}) lösbar mit einer jeweiligen Spindel (M₁, M₂...M_{N}) koppelbar ist; wobei jedes Werkzeug (T₁, T₂... T_{N}) entlang der Längsachse (A₁, A₂...A_{N}) einer jeweiligen Spindel (M₁, M₂...M_{N}) angeordnet ist.

9. Bearbeitungskopf (1) nach einem der vorherigen Ansprüche, **dadurch gekennzeichnet, dass** jedes Werkzeug (T₁, T₂...T_{N}) eine Bohrkrone umfasst.

10. Bearbeitungskopf (1) nach einem der vorherigen Ansprüche, **dadurch gekennzeichnet, dass** der Bearbeitungskopf (1) einen oder mehrere Werkzeughalterköpfe (TH1; TH2) umfasst, jeder Werkzeughalterkopf (TH1; TH2) mit einem oder mehreren jeweiligen weiteren Werkzeugen (TH1₁, TH1₂...TH1_{N}; TH2₁, TH2₂...TH2_{N}) versehen ist, wobei jedes der weiteren Werkzeuge (TH1₁, TH1₂...TH1_{N}; TH2₁, TH2₂... TH2_{N}) eine jeweilige weitere Längsachse (A₁₁, A₁₂...A_{1N}; A₂₁, A₂₂...A_{2N}) aufweist und in Bezug auf den Bearbeitungskopf (1) auf eine Weise angeordnet ist, dass jede weitere Längsachse (A₁₁, A₁₂...A_{1N}; A₂₁, A₂₂...A_{2N}) senkrecht zu der Längsachse (A) der Welle (11A) der Bewegungsübertragungsgruppe (11) ist; jedes weitere Werkzeug (TH1₁, TH1₂...TH1_{N}; TH2₁, TH2₂...TH2_{N}) vorzugsweise umfassend eine jeweilige Bohrkrone,
dass das erste Abschnittsende (PE1) jeder Spindel (M₁, M₂...M_{N}) geformt ist, um auf abnehmbare Weise mit dem einen oder den mehreren Werkzeughalterköpfen (TH1; TH2) verbunden zu werden.

11. Werkzeugmaschine zum Bearbeiten von Werkstücken, umfassend:
- einen Sockel,
- einen Arbeitstisch zum Tragen mindestens eines Werkstücks, wobei der Arbeitstisch auf dem Sockel angeordnet ist,
- eine Arbeitseinheit zum Bearbeiten des Werkstücks,
**dadurch gekennzeichnet, dass**
die Arbeitseinheit mindestens einen Bearbeitungskopf (1) nach einem der vorherigen Ansprüche umfasst.

## Revendications

1. Tête de travail (1) pour pièces à travailler, comprenant :
- un groupe de transmission de mouvement (11) comprenant un arbre (11A) ayant un axe longitudinal (A) et un moteur pour faire tourner ledit arbre (11A) autour dudit axe longitudinal (A),
- une pluralité d'outils (T₁, T₂...T_{N}),
- une pluralité de broches (M₁, M₂...M_{N}) ayant un axe longitudinal respectif (A₁, A₂...A_{N}), où chaque broche (M₁, M₂...M_{N}) comprend une première partie d'extrémité (PE1) formée pour supporter un outil respectif (T₁, T₂...T_{N}) et mobile entre une position de repos, où une première partie d'extrémité respective (PE1) est au moins partiellement rétractée dans ladite tête de travail (1), et une position de fonctionnement, où une première partie d'extrémité respective (PE1) est déplacée d'une distance prédéterminée le long de l'axe longitudinal respectif (A₁, A₂...A_{N}) de la broche (M₁, M₂...M_{N}),
- un mécanisme de transmission de mouvement (CR, R₁, R₂...R_{N}) pour transmettre le mouvement rotatif de l'arbre (11A) dudit groupe de transmission de mouvement (11) à chaque broche (M₁, M₂...M_{N}),
où
ladite tête de travail (1) comprend un dispositif de couplage respectif (G1, G2) pour chaque broche (M₁, M₂...M_{N}) afin de coupler une broche (M₁, M₂...M_{N}) to audit mécanisme de transmission de mouvement (CR, R₁, R₂...R_{N}) lorsque ladite broche (M₁, M₂...M_{N}) est en position de fonctionnement, de manière à ce qu'un mouvement de rotation soit transmis par ledit groupe de transmission de mouvement (11) à ladite broche (M₁, M₂...M_{N}), et de désaccoupler une broche (M₁, M₂...M_{N}) dudit mécanisme de transmission de mouvement (CR, R₁, R₂...R_{N}) lorsque ladite broche (M₁, M₂...M_{N}) est en position de repos, de telle sorte qu'un mouvement de rotation dudit groupe de transmission de mouvement (11) n'est pas transmis à ladite broche (M₁, M₂ ...M_{N}),
où
chaque dispositif de couplage (G1, G2) comprend un premier moyen d'accouplement libérable (G1) intégré audit mécanisme de transmission de mouvement (R₁, R₂...R_{N}), et un second moyen d'accouplement libérable (G2) pour chaque broche (M₁, M₂...M_{N}), où ledit second moyen d'accouplement libérable (G2) est intégré à une broche respective (M₁, M₂...M_{N}) et sont configurés pour être couplés/découplés des premiers moyens d'accouplement libérables respectifs (G1) de telle sorte qu'une ou plusieurs broches (M₁, M₂...M_{N}) sont en position de fonctionnement uniquement lorsque lesdits premiers moyens d'accouplement libérables (G1; L1) sont couplés aux seconds moyens d'accouplement libérables respectifs (G2),
**caractérisé par le fait que**
ledit premier moyen d'accouplement libérable (G1) consiste en au moins un premier aimant (G1), et ledit second moyen d'accouplement libérable (G2) consiste en au moins un second aimant (G2), de sorte que, lorsque ledit premier aimant (G1) est couplé audit second aimant (G2), une force d'attraction est générée.

2. Tête de travail (1) selon les revendications précédentes, **caractérisée en ce que** ledit mécanisme de transmission de mouvement (CR, R₁, R₂...R_{N}) comprend un élément moteur (CR) associé audit arbre (11A) et une pluralité d'éléments entraînés (R₁, R₂...R_{N}), où chaque élément entraîné (R₁, R₂...R_{N}) est associé à une broche respective (M₁, M₂...M_{N}) .

3. Tête de travail (1) selon la revendication précédente, **caractérisée en ce que** l'élément moteur (CR) est coaxial à l'arbre (11A), et chaque élément moteur (R₁, R₂...R_{N}) est coaxial à une broche respective (M₁, M₂...M_{N}) .

4. Tête de travail (1) selon la revendication 2 ou 3, **caractérisée en ce que** ledit élément moteur (CR) comprend une roue dentée motrice (CR) et chaque élément entraîné (R₁, R₂...R_{N}) comprend une roue dentée entraînée respective (R₁, R₂...R_{N}), où ladite roue dentée motrice (CR) est engrenée avec au moins une roue dentée entraînée (R₁, R₂...R_{N}) .

5. Tête de travail (1) selon l'une quelconque des revendications précédentes, **caractérisée en ce que** ladite tête de travail (1) comprend un dispositif de déplacement (MD) respectif pour chaque broche (M₁, M₂...M_{N}), où chaque dispositif de déplacement (MD) est configuré pour déplacer une broche respective (M₁, M₂...M_{N}) de ladite position de repos à ladite position de fonctionnement et vice versa.

6. Tête de travail (1) selon la revendication 5,
**caractérisé**
**en ce que**
chaque dispositif de déplacement (MD) comprend une chambre (C) et un piston (P), coulissant à l'intérieur de ladite chambre (C) dans une première direction et dans une seconde direction, opposée à ladite première direction,
**en ce que**
chaque broche (M₁, M₂...M_{N}) comprend une seconde partie d'extrémité (PE2), opposée à ladite première partie d'extrémité (PE1), reliée à a un piston (P) respectif, de sorte que le mouvement dudit piston (P) entraîne la translation d'une broche respective (M₁, M₂...M_{N}) le long de son axe longitudinal (A₁, A₂...A_{N}) .

7. Tête de travail (1) selon la revendication 6, **caractérisée en ce que** chaque dispositif mobile (MD) comprend une entrée pour permettre à un fluide de pénétrer dans ladite chambre (C), de manière à provoquer le mouvement dudit piston (P) dans ladite première direction et à maintenir une broche respective (M₁, M₂...M_{N}) en position de fonctionnement, et des moyens élastiques (S), mobiles entre a l'état comprimé, lorsque ledit fluide pénètre dans ladite chambre (C), et un état expansé, lorsque le passage dudit fluide dans ladite chambre (C) est empêché ou que ledit fluide dans ladite chambre (C) n'est pas sous pression, de sorte que ledit piston (P) se déplace dans ladite seconde direction, amenant la broche respective (M₁, M₂...M_{N}) en position de repos.

8. Tête de travail (1) selon l'une quelconque des revendications précédentes, **caractérisée en ce que** chaque outil (T₁, T₂...T_{N}) est coupable de manière amovible à une broche respective (M₁, M₂...M_{N}); chaque outil (T₁, T₂... T_{N}) étant disposé le long de l'axe longitudinal (A₁, A₂...A_{N}) d'une broche respective (M₁, M₂...M_{N}) .

9. Tête de travail (1) selon l'une quelconque des revendications précédentes, **caractérisée par le fait que** chaque outil (T₁, T₂...T_{N}) comprend un trépan.

10. Tête de travail (1) selon l'une quelconque des revendications précédentes, **caractérisée en ce que** ladite tête de travail (1) comprend une ou plusieurs têtes porte-outils (TH1 ; TH2), chaque tête porte-outils (TH1 ; TH2) étant pourvue d'un ou plusieurs autres outils respectifs (TH1₁, TH1₂...TH1_{N}; TH2₁, TH2₂...TH2_{N}), où chacun desdits autres outils (TH1₁, TH1₂... TH1_{N}; TH2₁, TH2₂... TH2_{N}) possède a axe longitudinal supplémentaire respectif (A₁₁, A₁₂...A_{1N}; A₂₁, A₂₂...A_{2N}) et est disposé par rapport à la tête de travail (1) de telle sorte que chaque autre axe longitudinal (A₁₁, A₁₂...A_{1N}; A₂₁, A₂₂...A_{2N}) est perpendiculaire à l'axe longitudinal (A) de l'arbre (11A) dudit groupe de transmission de mouvement (11); chaque outil supplémentaire (TH1₁, TH1₂...TH1_{N}; TH2₁, TH2₂...TH2_{N}) comprenant de préférence un trépan de forage respectif,
**en ce que**
la première partie d'extrémité (PE1) de chaque broche (M₁, M₂...M_{N}) est conçue pour être couplée de manière amovible à ladite tête de porte-outil (TH1 ; TH2).

11. Machine-outil pour pièces à travailler, comprenant :
- un sous-sol,
- une table de travail pour supporter au moins une pièce, où ladite table de travail est disposée sur ledit sous-sol,
- une unité de travail pour travailler ladite pièce,
**caractérisée par le fait que**
cette unité de travail comprend au moins une tête de travail (1) selon l'une quelconque des revendications précédentes.
